# EUROPÄISCHE PATENTSCHRIFT

(11) **EP 0 911 612 B1**
(45) Veröffentlichungstag und Bekanntmachung des Hinweises auf die Patenterteilung: **14.06.2006**
(21) Anmeldenummer: 98119002.8
(22) Anmeldetag: 08.10.1998
(51) Int. Cl.: G01D 5/347

(54) **Längenmesseinrichtung und Maschine mit einer Längenmesseinrichtung**
Length measuring device and machine provided with same
Dispositif de mesure de longueurs et machine pourvue de ce dispositif

(30) Priorität: 27.10.1997 DE 19747356
(43) Veröffentlichungstag der Anmeldung: 28.04.1999
(73) Patentinhaber: Dr. Johannes Heidenhain GmbH, 83292 Traunreut (DE)
(72) Erfinder: Tondorf, Sebastian Dr.-Ing., 83329 Waging (DE); Falkinger, Bernhard Dipl.-Ing. (FH), 83365 Nussdorf (DE)

(56) Entgegenhaltungen:
- WO-A-91/03145
- DE-A- 2 505 587

## Beschreibung

Die Erfindung betrifft eine Längenmeßeinrichtung zum Messen der Relativlage zweier Objekte gemäß dem Oberbegriff des Anspruches 1.

Eine derartige Längenmeßeinrichtung ist in der DE 25 05 587 C3 beschrieben. Der Maßstab ist über einen Winkel an einem der zu messenden Objekte befestigt und die Abtasteinrichtung ist über einen Montagefuß am zweiten Objekt befestigt. Der Winkel weist eine Schwachstelle in Form einer Nut auf. Dieses gelenkartige Befestigungselement erlaubt eine Drehbewegung des Maßstabes um eine Achse senkrecht zur Meßrichtung. Zum Ausgleich von Führungsungenauigkeiten ist zwischen dem Montagefuß und der Abtasteinrichtung eine Kupplung vorgesehen. Die Abtasteinrichtung ist am Maßstab geführt.

In der DE 31 13 962 A1 ist eine Längenmeßeinrichtung beschrieben, die während des Anbaus um seine Längsachse drehbar gelagert ist. Während des Meßbetriebes ist eine Drehbarkeit ausgeschlossen, da eine Fixierung der Enden in der endgültigen Anbaulage erfolgt.

Der Erfindung liegt die Aufgabe zugrunde, eine Längenmeßeinrichtung anzugeben, mit der auf einfache Weise der Abstand zweier Teile gemessen werden kann, wobei sich die zwei Teile im Betrieb um die Meßachse gegeneinander verdrehen können.

Diese Aufgabe wird erfindungsgemäß durch die Merkmale des Anspruches 1 gelöst.

Die mit der Erfindung erzielten Vorteile bestehen insbesondere darin, daß ein stabiler Aufbau, eine hohe Meßgenauigkeit und ein thermisch günstiges Verhalten erreicht wird.

Vorteilhafte Ausbildungen der Längenmeßeinrichtung sind in den abhängigen Ansprüchen 2 bis 8 angegeben.

Die Erfindung betrifft weiterhin eine Maschine mit einer Längenmeßeinrichtung gemäß dem Oberbegriff des Anspruches 9.

Eine derartige Maschine ist in der WO 91/03145 A1 beschrieben. Die Relativlage zweier Maschinenteile ist durch mehrere Teleskoparme veränderbar. Die Relativlage ist durch die momentane Länge der Teleskoparme bestimmbar. Hierzu ist in jedem Teleskoparm eine Längenmeßeinrichtung vorgesehen. Sie besteht aus einem stangenförmigen runden Maßstab und einer Abtasteinheit.

Der Erfindung liegt weiterhin die Aufgabe zugrunde, eine Maschine mit zumindest einem Teleskoparm zwischen zwei Maschinenkörpern anzugeben, wobei die Auszuglänge des Teleskoparmes mit einer kompakten und hochgenauen Längenmeßeinrichtung gemessen werden kann.

Diese Aufgabe wird erfindungsgemäß durch die Merkmale des Anspruches 9 gelöst.

Vorteilhafte Ausbildungen sind in den abhängigen Ansprüchen 10 bis 15 angegeben.

Ausführungsbeispiele der Erfindung werden anhand der Zeichnungen näher erläutert.

Es zeigen
- Figur 1: einen Teleskoparm mit einer Längenmeßeinrichtung im ausgezogenen Zustand,
- Figur 2: den Teleskoparm gemäß Figur 1 im zusammengeschobenen Zustand,
- Figur 3: einen vergrößerten Ausschnitt der Längenmeßeinrichtung gemäß Figur 1,
- Figur 4: einen Schnitt IV-IV der Längenmeßeinrichtung gemäß Figur 3,
- Figur 5: die Abtasteinrichtung der Längenmeßeinrichtung gemäß Figur 1 im Detail,
- Figur 6: einen Schnitt VI-VI der Längenmeßeinrichtung gemäß Figur 1,
- Figur 7: einen vergrößerten Ausschnitt der Längenmeßeinrichtung gemäß Figur 1,
- Figur 8: eine endseitige Draufsicht auf die Längenmeßeinrichtung gemäß Figur 7,
- Figur 9: einen Schnitt IX-IX der Figur 8 und
- Figur 10: das Prinzip einer Hexapod-Maschine.

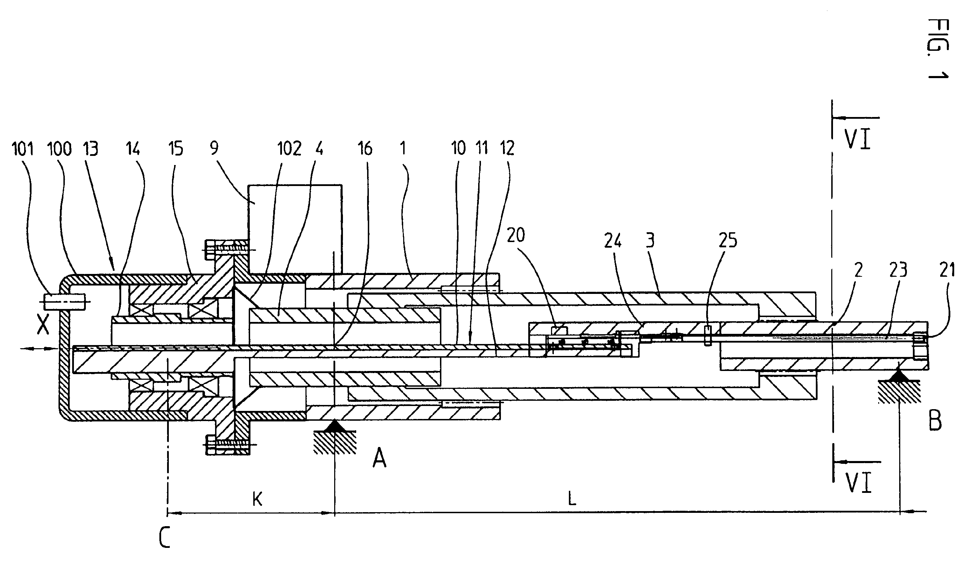

In Figur 1 ist ein Teleskoparm mit einem integrierten Längenmeßsystem dargestellt. Der Teleskoparm besteht aus mindestens zwei - im Beispiel aus drei - ineinanderverschiebbaren Teleskopteilen 1, 2, 3. Die gegenseitige Verschiebung der beiden äußeren Teleskopteile 1, 2 kann hydraulisch erfolgen, oder mittels einer motorisch angetriebenen Keilwelle 4. Bei einer Drehung der Keilwelle 4 verschieben sich die beiden äußeren Teleskopteile 1 und 2 je nach Drehrichtung in Meßrichtung X zueinander oder gegeneinander.

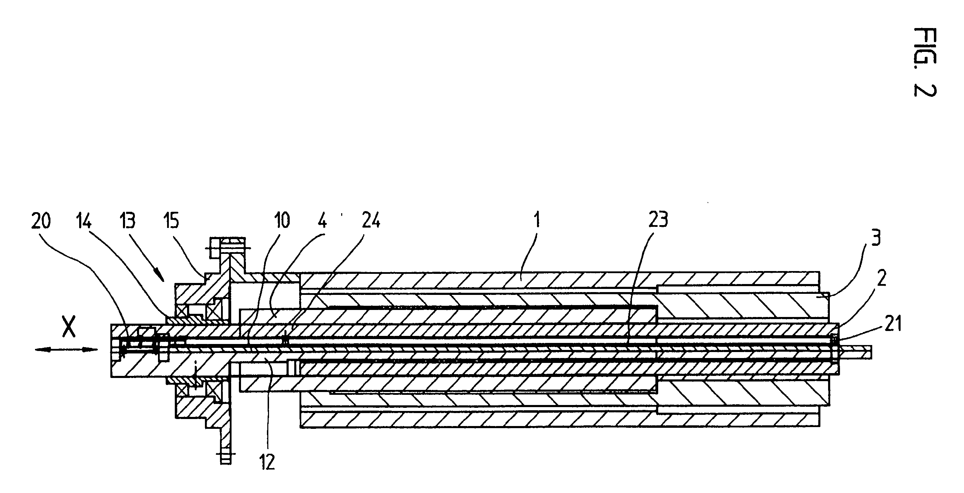

In Figur 2 ist der Teleskoparm mit der darin integrierten Längenmeßeinrichtung im zusammengeschobenen Zustand dargestellt.

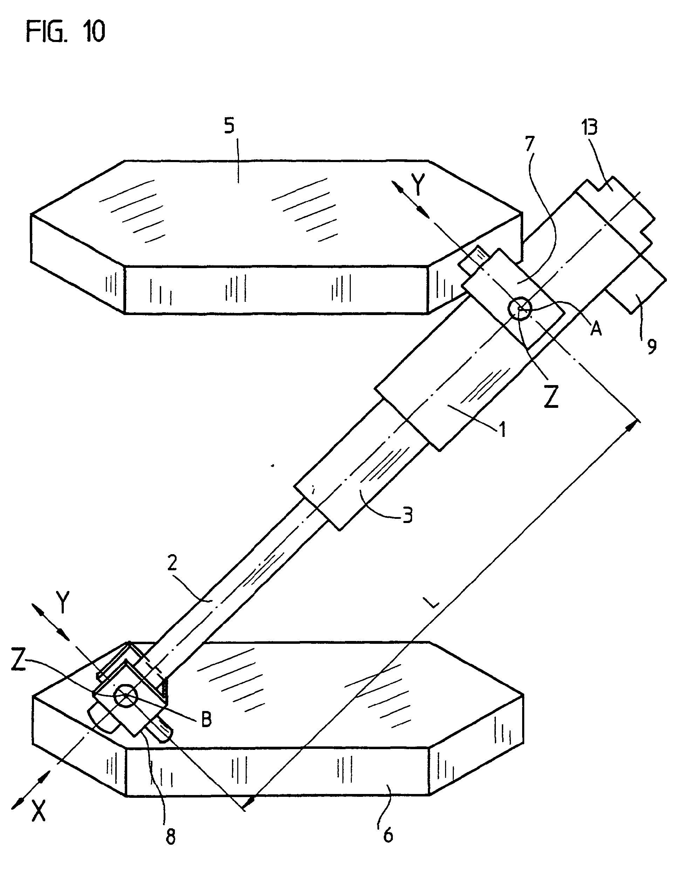

Derartige Teleskoparme sind an sich bekannt und werden beispielsweise in Hexapod-Maschinen (Figur 10) eingesetzt, bei denen zwei Plattformen 5, 6 über mehrere Teleskoparme relativ zueinander bewegt werden. Das Prinzip einer Hexapod-Maschine ist in Figur 10 dargestellt. Aus Gründen der Übersichtlichkeit ist nur einer der sechs Teleskoparme zwischen den beiden Plattformen 5, 6 eingezeichnet. Der Aufbau einer Hexapod-Maschine ist besonders einfach, wenn das erste Teleskopteil 1 über ein Kardangelenk 7 in zwei Freiheitsgraden winkelbeweglich, aber um die Längsachse X verdrehsteif an der ersten Plattform 5 befestigt ist, und wenn das zweite Teleskopteil 2 über ein weiteres Kardangelenk 8 in zwei Freiheitsgraden winkelbeweglich, aber um die Längsachse X verdrehsteif an der zweiten Plattform 6 befestigt ist. In Figur 10 sind die Kardangelenke 7, 8 nur schematisch dargestellt. Die beiden Teleskopteile 1, 2 sind jeweils über die Kardangelenke 7, 8 um die erste Achse Y und um die zweite Achse Z drehbar an den Plattformen 5, 6 gelagert. Beide Achsen Y und Z verlaufen senkrecht zueinander und Z verläuft senkrecht zur Längsachse X des Teleskoparmes. Durch die Verwendung von Kardangelenken 7, 8 wird eine spielfreie und kostengünstige Lagerung erreicht.

Die Plattform 5 wird beispielsweise durch sechs derartige Teleskoparme relativ zur Plattform 6 bewegt. Bei diesen Bewegungen kann auch eine Verdrehung des einen Teleskopteils 1 relativ zum anderen Teleskopteil 2 um die Längsachse X erfolgen. Diese Verdrehung wird im Beispiel bei Verwendung von drei Teleskopteilen 1, 2, 3 durch die drehbare Lagerung beider Teleskopteile 1, 2 am mittleren, über einen Motor 9 und die Keilwelle 4 angetriebenen Teleskopteil 3 ermöglicht.

Um die exakte Lage der Plattform 5 relativ zur Plattform 6 zu erfassen, ist in jedem der Teleskoparme der Hexapod-Maschine eine Längenmeßeinrichtung integriert. Mit der Längenmeßeinrichtung wird die momentane Auszuglänge des Teleskoparmes, also der Abstand L zwischen den Befestigungspunkten A und B gemessen.

Die Längenmeßeinrichtung ist im Hohlraum des Teleskoparmes eingebaut, der Einbauraum ist also durch den Durchmesser der Teleskopteile 1, 2, 3 begrenzt. Als Montageflächen zur Befestigung der Längenmeßeinrichtung stehen die inneren Zylinderflächen der Teleskopteile 1, 2 und die äußeren Stirnflächen zur Verfügung.

Die Längenmeßeinrichtung besteht aus einem Maßstab 10 aus Glas oder Glaskeramik mit einem rechteckförmigen Querschnitt. Auf einer ebenen Oberfläche des Maßstabes 10 ist eine inkrementale Teilung 11 aufgebracht, die mittels einer Abtasteinrichtung 20 in an sich bekannter Weise lichtelektrisch abgetastet wird. Die Teilung 11 besteht aus abwechselnd reflektierenden und nicht reflektierenden Bereichen, die von einer Lichtquelle der Abtasteinrichtung 20 beleuchtet werden. Die von der Teilung 11 reflektierten Lichtstrahlenbündel werden von Photodetektoren der Abtasteinrichtung 20 erfaßt und daraus positionsabhängige elektrische Abtastsignale erzeugt, die einer Auswerteeinrichtung zugeführt werden, in der der aktuelle Abstand L ermittelt wird.

Der Maßstab 10 ist an einem Maßstabträger 12 befestigt. An dem Meßbezugspunkt A ist der Maßstab 10 mit dem Maßstabträger 12 starr, also in Meßrichtung X unverrückbar befestigt. Im übrigen Bereich ist der Maßstab 10 elastisch über eine Klebeschicht oder einen viskosen Flüssigkeitsfilm (z.B. Öl) auf dem Maßstabträger 12 translatorisch beweglich gelagert und somit vom Maßstabträger 12 entkoppelt. Zur starren Fixierung des Maßstabes 10 im Meßbezugspunkt A kann ein fest aushärtender Klebstoff verwendet werden. Eine andere Möglichkeit ist, daß die Mitte des Maßstabes 10 mit dem Meßbezugspunkt A zusammenfällt, dann kann der Maßstab 10 über seine gesamte Länge elastisch am Maßstabträger 12 gelagert werden, da sich der Meßbezugspunkt zwangsläufig in der Mitte des Maßstabes 10 einstellt.

Der Maßstabträger 12 ist über ein Befestigungselement in Form eines Drehlagers 13 am äußeren Ende des Teleskopteils 1 befestigt. Das Drehlager 13 besteht aus einem Innenring 14, an dem der Maßstabträger 12 starr befestigt ist und einem relativ zum Innenring 14 drehbaren Außenring 15, der mit dem Teleskopteil 1 und somit mit dem Meßbezugspunkt A starr gekoppelt, beispielsweise verschraubt ist. Das Drehlager 13 lagert somit den Maßstabträger 12 an einem Endbereich C relativ zum Außenring 15 in fünf Freiheitsgraden starr und um die Meßachse X drehbar und weitgehend spielfrei. Der übrige Bereich des Maßstabträgers 12 ist translatorisch (in Meßrichtung X) beweglich gelagert. Der Maßstabträger 12 ist mit dem Innenring 14 des Drehlagers 13 im Endbereich C starr verbunden, beispielsweise verschraubt.

Zur Erzielung eines kompakten Aufbaus ist es vorteihaft, wenn das Drehlager 13 und somit der Endbereich C vom Meßbezugspunkt A beabstandet angeordnet ist. Damit der Abstand K die Messung des Abstandes L nicht negativ beeinflußt, ist es vorteilhaft, wenn das Teilstück des Maßstabträgers 12 zwischen den Punkten C und A den gleichen thermischen Ausdehnungskoeffizienten hat, wie das Verbindungsstück vom Außenring 15 zum Teleskopteil 1 zwischen den Punkten C und A. Durch Temperaturänderungen verursachte Längenänderungen zwischen A und C werden somit kompensiert.

Der Ausdehnungskoeffizient des Maßstabes 10 ist nahezu 0, um den Abstand zwischen den Punkten A und B möglichst temperaturunabhängig messen zu können.

Die drehbare Einheit, bestehend aus dem Innenring 14, dem Maßstabträger 12 und dem Maßstab 10 ist ausgewuchtet, um während der Drehung um die Meßachse X keine unzulässigen Torsionskräfte auf das Drehlager 13 und den Maßstab 10 auszuüben.

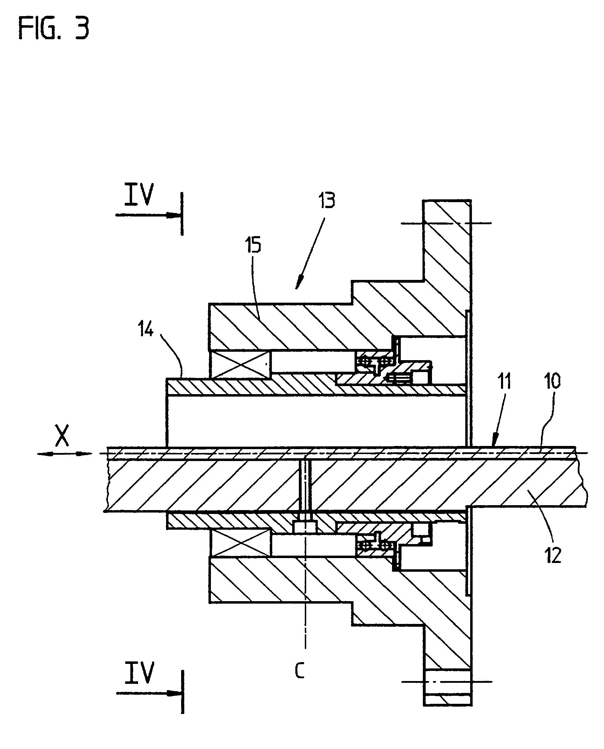

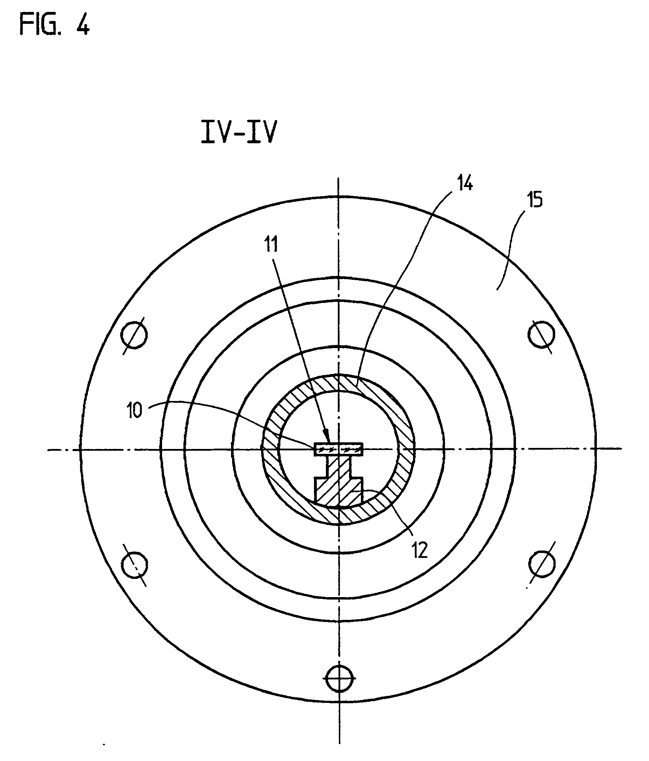

In Figur 3 ist der Bereich des Drehlagers 13 vergrößert dargestellt und in Figur 4 ein Schnitt IV-IV des Drehlagers 13 aus Figur 3. Das Drehlager 13 kann ein Kugellager, Wälzlager oder Nadellager sein.

Am zugänglichen Ende des Teleskopteiles 2 ist die Abtasteinrichtung 20 mittels eines Befestigungselementes 21 über eine Koppelstange 23 befestigt. Die Länge der Koppelstange 23 vom Befestigungselement 21 bis zur Abtasteinrichtung 20 entspricht zumindest etwa der erforderlichen Meßlänge und somit der Länge des Maßstabes 10. Die Koppelstange 23 ist ausschließlich im Bereich des zugänglichen Endes des Teleskopteiles 2 starr am Teleskopteil 2 montiert und im übrigen Bereich translatorisch (in Meßrichtung X) vom Teleskopteil 2 entkoppelt. Der thermische Ausdehnungskoeffizient der Koppelstange 23 ist annähernd 0, um die Positionsmessung unabhängig von Temperaturänderungen durchführen zu können.

Vorteilhaft ist es, wenn die Abtasteinrichtung 20 in Richtungen quer zur Meßrichtung X am Teleskopteil 2 und/oder einer daran befestigten Halterung 24 gelagert ist. Diese Lagerung kann in Form von Aufhängungen 25 realisiert sein.

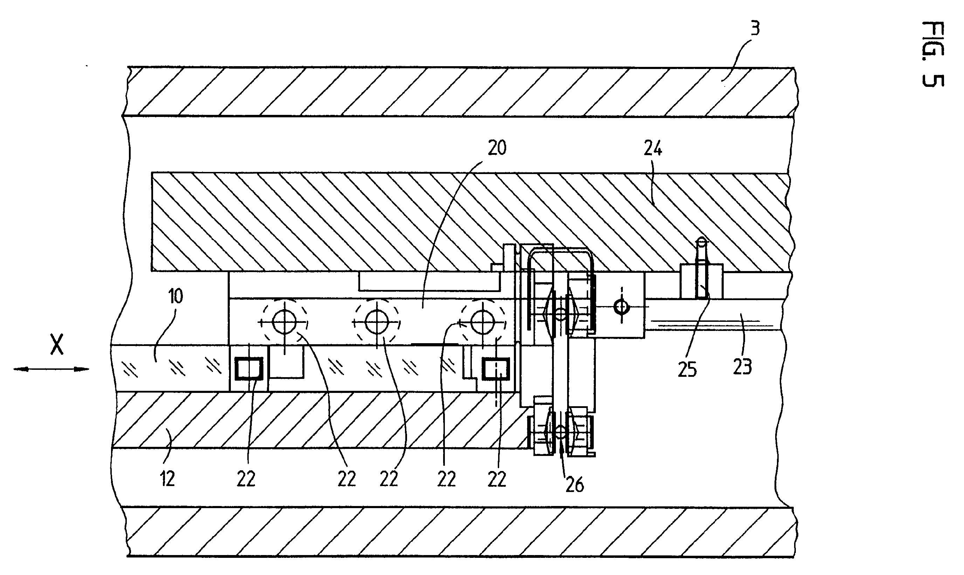

In Figur 5 ist der Bereich der Abtasteinrichtung 20 der Längenmeßeinrichtung vergrößert dargestellt. Die Abtasteinrichtung 20 ist über eine an sich bekannte Kupplung 26 an der Koppelstange 23 befestigt. Diese Kupplung 26 ist in Meßrichtung X steif und in Richtungen quer dazu in kleinen Bereichen nachgiebig. Verdrehungen des Teleskopteils 2 um die Meßachse X werden von der Koppelstange 23 über die Kupplung 26 auf den Maßstabträger 12 und somit auf den Maßstab 10 übertragen. Um diese Übertragung zu gewährleisten, ist eine Führung 22 zwischen der Abtasteinrichtung 20 und dem Maßstab 10 und/oder dem Maßstabträger 12 vorgesehen. Im dargestellten Beispiel ist diese Führung als Rollenführung mit Kugellagern 22 realisiert. Die Kugellager 22 sind an der Abtasteinrichtung 20 befestigt. Die einen Kugellager 22 stützen sich seitlich am Maßstab 10 ab und weitere Kugellager 22 stützen sich auf der senkrecht dazu verlaufenden, die Teilung 11 tragenden Oberfläche ab.

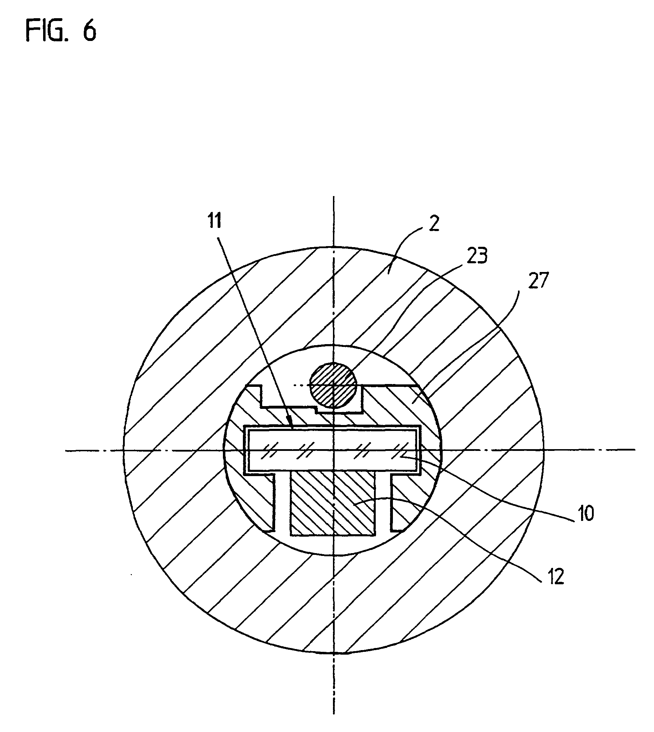

Zur Führung des Maßstabes 10 und des Maßstabträgers 12 kann alternativ, aber insbesondere zusätzlich, ein mit dem Teleskopteil 2 drehsteif verbundenes Führungsteil 27 eingesetzt werden. Dieses Führungsteil 27 ist aus Gründen der Übersichtlichkeit in den Figuren 1 bis 5 nicht dargestellt. Figur 6 zeigt einen Schnitt VI-VI aus Figur 1 in vergrößerter Darstellung mit dem Führungsteil 27. Das Führungsteil 27 ist eine Kunststoffschiene, die in das Teleskopteil 2 eingepreßt ist. Die Ausnehmung der Kunststoffschiene 27 ist der Kontur des Maßstabes 10 und/oder des Maßstabträgers 12 angepaßt und bildet eine Art Gleitführung für den Maßstab 10, um Drehbewegungen um die Meßachse X auf den Maßstab 10 zu übertragen und um einen schwingungsstabilen Aufbau zu erreichen.

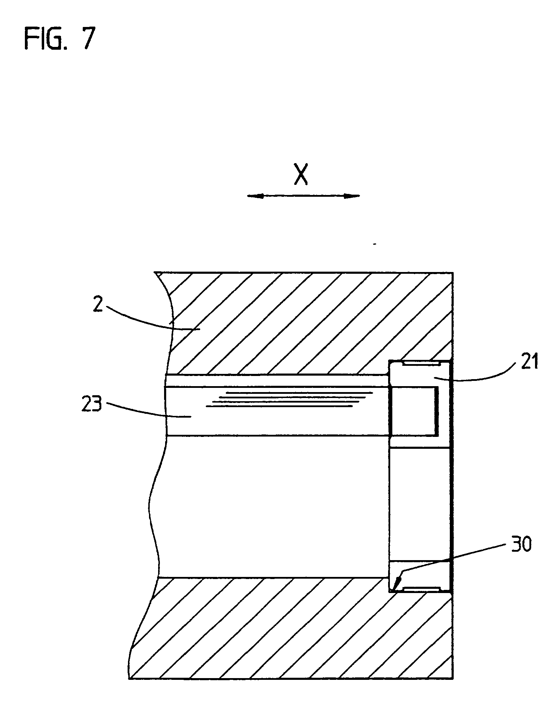

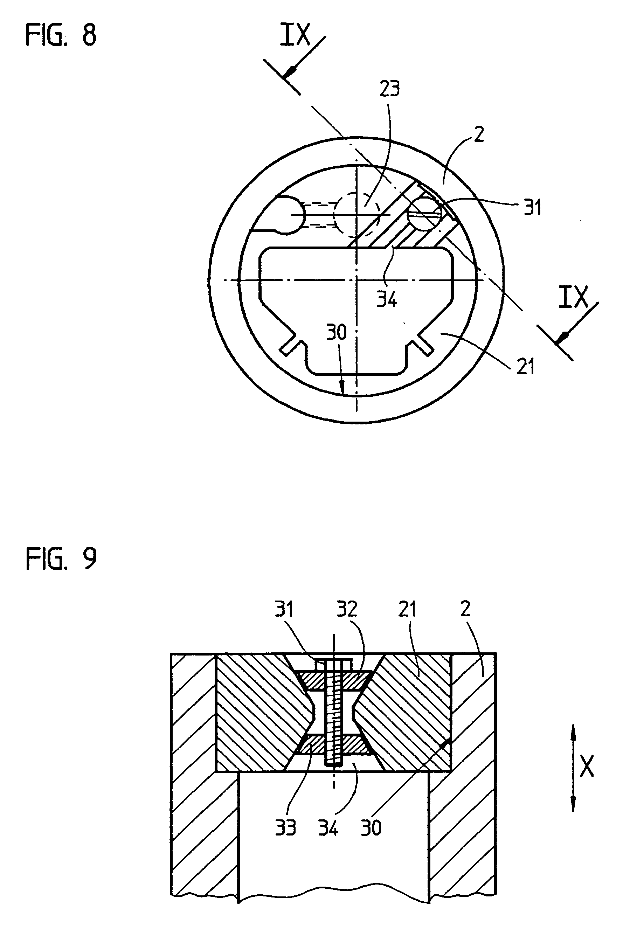

In den Figuren 7 bis 9 ist das Befestigungselement 21 zur Befestigung der Abtasteinrichtung 20 am Teleskopteil 2 vergrößert dargestellt. Figur 7 zeigt einen Querschnitt und Figur 8 eine Draufsicht auf das Ende des Teleskoparmes 2. Zur einfachen Montage ist ein Spreizelement 21 in Form eines Klemmringes vorgesehen. An diesem Klemmring 21 ist die Abtasteinrichtung 20 über die Koppelstange 23 befestigt. Der Klemmring 21 wird über ein Betätigungselement radial aufgespreizt und an einer inneren Zylinderfläche 30 des Teleskoparmes 2 radial geklemmt. Das Betätigungselement kann eine Schraube 31 sein, die axial (X-Richtung) zugänglich und betätigbar ist, und zwei Keile 32, 33 gegenläufig verschiebt. Die Keile 32, 33 stützen sich an schrägen Flächen des Klemmringes 21 ab, wodurch eine axiale Bewegung der Keile 32, 33 in eine radiale Bewegung umgewandelt wird, und somit eine Aufweitung des geschlitzten Klemmringes 21 verursacht.

In Figur 9 ist ein Schnitt IX-IX der Figur 8 gezeigt. Das ringförmige Spreizelement 21 weist einen Schlitz 34 auf. Dieser Schlitz 34 teilt das Spreizelement 21 derart, daß der äußere Durchmesser durch die Keile 32, 33 vergrößert werden kann. Das Spreizen erfolgt durch die zwei in axialer Richtung beabstandet hintereinander angeordneten Keile 32, 33, die gegenläufig konische Oberflächen aufweisen, die sich an korrespondierenden Oberflächen des Spreizelementes 21 abstützen. Durch Drehen der Schraube 31 werden die beiden Keile 32, 33 aneinander gezogen, wodurch sich der Schlitz 34 vergrößert.

Die Funktion der Keile 32, 33 kann auch direkt von den Gewindegängen (Gewindeflanken) einer nicht dargestellten Schraube übernommen werden, die in ein im Schlitz axial verlaufendes Gewinde des Spreizelementes eingeschraubt ist und sich mit dem Kopf an einer Fläche des Spreizelementes abstützt.

In nicht dargestellter Weise kann das Spreizelement auch ein starrer Ringkörper sein, in dem eine oder mehrere Exzenterschrauben verdrehbar gelagert sind. Der Kopf einer derartigen Exzenterschraube weist eine exzentrisch verlaufende Umfangsfläche auf, die durch Drehen mit der Zylinderfläche 30 in Kontakt tritt und eine radiale Klemmkraft zwischen dem Ringkörper und dem Teleskopteil 2 hervorruft.

Zur radialen Klemmung der Abtasteinheit 20 an der inneren Zylinderfläche 30 können auch andere Konstruktionen eingesetzt werden, hierzu wird ausdrücklich auf die EP 0 762 082 A1 verwiesen.

Im beschriebenen Beispiel ist auf dem Maßstab 10 eine inkrementale Teilung 11 aufgebracht, zusätzlich können auch Referenzmarken, insbesondere absolutcodierte Referenzmarken aufgebracht sein. Der Maßstab kann auch nur eine absolute Codierung aufweisen.

Im beschriebenen Beispiel bildet die Führungsschiene 27 eine Gleitführung für den Maßstab 10. In nicht dargestellter Weise kann die Führungsschiene zusätzlich eine Rollen-, bzw. Wälzlagerführung zur reibungsfreien Lagerung des Maßstabes 10 aufweisen. Die Führungsschiene 27 kann beispielsweise auch durch eine Kugelumlaufführung ersetzt werden.

Die Längenmeßeinrichtung kann auch einen Anschluß für Druckluft aufweisen. Dieser Anschluß 101 ist nur in Figur 1 dargestellt und ist in einer Abdeckkappe 100 oder alternativ am Teleskopteil 2 vorgesehen. Wichtig ist, daß sich der Drucklufteinlaß im Raum des Maßstabes 10, also im Meßraum befindet. Gemäß Figur 1 ist zusätzlich eine elastische Dichtung 102 zur Trennung des Raumes, in dem sich der Maßstab 10 befindet und des Raumes, in dem sich der Antrieb 9 mit der Keilwelle 4 befindet vorgesehen.

## Patentansprüche

1. Längenmeßeinrichtung zum Messen des Abstandes eines Punktes (A) eines ersten Objektes (1) gegenüber einem Punkt (B) eines zweiten Objektes (2), mit
- einem Maßstab (10) mit einer Teilung (11) wobei der Maßstab (10) ein Befestigungselement (13) aufweist, mit dem er an dem ersten Objekt (1) befestigbar ist;
- einer Abtasteinrichtung (20) zur Abtastung der Teilung (11), wobei die Abtasteinrichtung (20) ein Befestigungselement (21) aufweist, mit dem sie an dem zweiten Objekt (2) befestigbar ist;
- Führungselementen (22) an der Abtasteinrichtung (20) zur parallelen Führung der Abtasteinrichtung (20) entlang des Maßstabes (10),
**dadurch gekennzeichnet, daß**
- das Befestigungselement (13) des Maßstabes (10) ein Drehlager (13) zur rotatorisch beweglichen Lagerung des Maßstabes (10) um die Meßachse (X) während des Meßbetriebes aufweist.

2. Längenmeßeinrichtung nach Anspruch 1, **dadurch gekennzeichnet, daß** das Drehlager (13) in einem Endbereich (C) des Maßstabes (10) angeordnet ist.

3. Längenmeßeinrichtung nach Anspruch 2, **dadurch gekennzeichnet, daß** der Maßstab (10) auf einem Maßstabträger (12) von einem Meßbezugspunkt (A) ausgehend transversal beweglich gelagert ist, und daß der Maßstabträger (12) an einem Endbereich (C) mit einem inneren Teil (14) des Drehlagers (13) in Meßrichtung (X) starr verbunden ist, und daß das Drehlager (13) ein relativ zum inneren Teil (13) frei drehbares äußeres Teil (15) aufweist, das zur Befestigung an dem ersten Objekt (1) dient.

4. Längenmeßeinrichtung nach Anspruch 3, **dadurch gekennzeichnet, daß** der Meßbezugspunkt (A) vom Endbereich (C) in Meßrichtung (X) beabstandet angeordnet ist, und daß das äußere Teil (15) des Drehlagers (13) am Meßbezugspunkt (A) mit dem ersten Objekt (1) befestigt ist.

5. Längenmeßeinrichtung nach Anspruch 1, **dadurch gekennzeichnet, daß** die Abtasteinrichtung (20) über eine Koppelstange (23) am Befestigungselement (21) befestigt ist.

6. Längenmeßeinrichtung nach Anspruch 5, **dadurch gekennzeichnet, daß** die Länge der Koppelstange (23) zumindest annähernd der Länge des Maßstabes (10) entspricht.

7. Längenmeßeinrichtung nach einem der vorhergehenden Ansprüche, **dadurch gekennzeichnet, daß** das Befestigungselement der Abtasteinrichtung (20) ein Element (21) aufweist, das an einer Innenfläche (30) des zweiten Objektes (2) radial klemmbar ist, wobei das Befestigungselement insbesondere ein Spreizelement (21) aufweist, das über ein Betätigungselement (31, 32, 33) radial aufweitbar und **dadurch** an einer Innenfläche (30) des zweiten Objektes (2) klemmbar ist.

8. Längenmeßeinrichtung nach einem der vorhergehenden Ansprüche, **dadurch gekennzeichnet, daß** die Abtasteinrichtung (20) Führungselemente (22) aufweist, die mit dem Maßstab (10) und/oder einem Maßstabträger (12) in Kontakt stehen und eine Verdrehung der Abtasteinheit (20) um die Meßachse (X) auf den Maßstab (10) übertragen wird.

9. Maschine mit
- zwei relativ zueinander bewegbaren Maschinenkörpern (5, 6)
- zumindest einem Teleskoparm zwischen den beiden Maschinenkörpern (5, 6) wobei der Teleskoparm aus zumindest zwei ineinanderschiebbaren und um die Längsachse (X) verdrehbaren Teleskopteilen (1, 2) besteht
- einem ersten Kardangelenk (7) am ersten Teleskopteil (1) zur winkelbeweglichen, aber um die Längsachse (X) verdrehsteifen Kopplung des ersten Teleskopteils (1) relativ zum ersten Maschinenkörper (5)
- einem zweiten Kardangelenk (8) am zweiten Teleskopteil (2) zur winkelbeweglichen, aber um die Längsachse (X) verdrehsteifen Kopplung des zweiten Teleskopteils (2) relativ zum zweiten Maschinenkörper (6)
- einer Längenmeßeinrichtung mit einem Maßstab (10), der am ersten Teleskopteil (1) und einer Abtasteinrichtung (20), die am zweiten Teleskopteil (2) angekoppelt ist,
**dadurch gekennzeichnet, daß**
- zwischen dem ersten Teleskopteil (1) und dem Maßstab (10) ein Drehlager (13) zur rotatorisch beweglichen Lagerung des Maßstabes (10) um die Längsachse (X) während des Meßbetriebes angeordnet ist.

10. Maschine nach Anspruch 9, **dadurch gekennzeichnet, daß** der Maßstab (10) auf einem Maßstabträger (12) von einem Meßbezugspunkt (A) ausgehend transversal beweglich gelagert ist, und daß der Maßstabträger (12) an einem Endbereich (C) mit einem inneren Teil (14) des Drehlagers (13) in Meßrichtung (X) starr verbunden ist, und daß das Drehlager (13) ein relativ zum inneren Teil (13) drehbares äußeres Teil (15) aufweist, das an einem freien Ende des ersten Teleskopteils (1) befestigt ist.

11. Maschine nach Anspruch 10, **dadurch gekennzeichnet, daß** das erste Teleskopteil (1) am Meßbezugspunkt (A) über das erste Kardangelenk (7) mit dem ersten Maschinenkörper (5) verbunden ist.

12. Maschine nach Anspruch 10 oder 11, **dadurch gekennzeichnet, daß** der Endbereich (C) vom Meßbezugspunkt (A) in Meßrichtung (X) beabstandet angeordnet ist, und daß der thermische Ausdehnungskoeffizient des Maßstabträgers (12) und des ersten Teleskopteils (1) zwischen diesen beiden Punkten (C, A) zumindest annähernd gleich ist.

13. Maschine nach einem der Ansprüche 9 bis 12, **dadurch gekennzeichnet, daß** die Abtasteinrichtung (20) über eine Koppelstange (23) am freien Ende des zweiten Teleskopteils (2) befestigt ist.

14. Maschine nach einem der Ansprüche 9 bis 13, **dadurch gekennzeichnet, daß** die Abtasteinrichtung (20) über ein Spreizelement (21) an einer inneren Fläche (30) des zweiten Teleskopteils (2) radial geklemmt ist.

15. Maschine nach einem der Ansprüche 9 bis 14, **dadurch gekennzeichnet, daß** an dem zweiten Teleskopteil (2) ein Führungsteil (27) drehstarr befestigt ist, in dem der Maßstab (10) und/oder ein Maßstabträger (12) geführt wird.

## Claims

1. Length measuring device for measuring the spacing of a point (A) of a first object (1) relative to a point (B) of a second object (2), having
- a scale (10) with a division (11), the scale (10) having a fixing element (13) with which it can be fixed on the first object (1);
- a scanning device (20) for scanning the division (11), the scanning device (20) having a fixing element (21) with which it can be fixed on the second object (2);
- guide elements (22) on the scanning device (20) for parallel guidance of the scanning device (20) along the scale (10),
**characterised in that**
- the fixing element (13) of the scale (10) has a rotary bearing (13) for rotationally moveable mounting of the scale (10) about the measuring axis (X) during the measuring operation.

2. Length measuring device according to claim 1, **characterised in that** the rotary bearing (13) is disposed in one end region (C) of the scale (10).

3. Length measuring device according to claim 2, **characterised in that** the scale (10) is mounted transversely moveably on a scale carrier (12) starting from a measuring reference point (A), and **in that** the scale carrier (12) is connected rigidly in the measuring direction (X) on one end region (C) to an inner part (14) of the rotary bearing (13), and **in that** the rotary bearing (13) has an outer part (15) which is freely rotatable relative to the inner part (13) and serves for fixing on the first object (1).

4. Length measuring device according to claim 3, **characterised in that** the measuring reference point (A) is disposed at a spacing from the end region (C) in the measuring direction (X) and **in that** the outer part (15) of the rotary bearing (13) is fixed to the first object (1) at the measuring reference point (A).

5. Length measuring device according to claim 1, **characterised in that** the scanning device (20) is fixed on the fixing element (21) via a coupling rod (23).

6. Length measuring device according to claim 5, **characterised in that** the length of the coupling rod (23) corresponds at least approximately to the length of the scale (10).

7. Length measuring device according to one of the preceding claims, **characterised in that** the fixing element of the scanning device (20) has an element (21) which can be clamped radially on an inner face (30) of the second object (2), the fixing element having in particular an expanding element (21) which can be expanded radially via an actuation element (31, 32, 33) and consequently can be clamped on an inner face (30) of the second object (2).

8. Length measuring device according to one of the preceding claims, **characterised in that** the scanning device (20) has guide elements (22) which are in contact with the scale (10) and/or with a scale carrier (12) and rotation of the scanning unit (20) about the measuring axis (X) is transmitted to the scale (10).

9. Machine having
- two machine bodies (5, 6) which are moveable relative to each other
- at least one telescopic arm between the two machine bodies (5, 6), the telescopic arm comprising at least two telescopic parts (1,2) which can be pushed one into the other and can be rotated about the longitudinal axis (X)
- a first universal joint (7) on the first telescopic part (1) for coupling of the first telescopic part (1) relative to the first machine body (5), said coupling being angularly moveable but non-rotatable about the longitudinal axis (X)
- a second universal joint (8) on the second telescopic part (2) for coupling of the second telescopic part (2) relative to the second machine body (6), said coupling being angularly moveable but non-rotatable about the longitudinal axis (X)
- a length measuring device having a scale (10) which is coupled to the first telescopic part (1) and a scanning device (20) which is coupled to the second telescopic part (2),
**characterised in that**
- between the first telescopic part (1) and the scale (10) a rotary bearing (13) is disposed for rotationally moveable mounting of the scale (10) about the longitudinal axis (X) during the measuring operation.

10. Machine according to claim 9, **characterised in that** the scale (10) is disposed transversely moveable on a scale carrier (12) starting from a measuring reference point (A), and **in that** the scale carrier (12) is connected rigidly in the measuring direction (X) on one end region (C) to an inner part (14) of the rotary bearing (13), and **in that** the rotary bearing (13) has an outer part (15) which is rotatable relative to the inner part (13) and is fixed on one free end of the first telescopic part (1).

11. Machine according to claim 10, **characterised in that** the first telescopic part (1) is connected to the first machine body (5) at the measuring reference point (A) via the first universal joint (7).

12. Machine according to claim 10 or 11, **characterised in that** the end region (C) is disposed at a spacing from the measuring reference point (A) in the measuring direction (X), and **in that** the thermal coefficient of expansion of the scale carrier (12) and of the first telescopic part (1) between these two points (C, A) is at least approximately the same.

13. Machine according to one of the claims 9 to 12, **characterised in that** the scanning device (20) is fixed on the free end of the second telescopic part (2) via a coupling rod (23).

14. Machine according to one of the claims 9 to 13, **characterised in that** the scanning device (20) is clamped radially via an expanding element (21) on an inner face (30) of the second telescopic part (2).

15. Machine according to one of the claims 9 to 14, **characterised in that** a guide part (27) is fixed non-rotatably on the second telescopic part (2), in which guide part the scale (10) and/or a scale carrier (12) is guided.

## Revendications

1. Dispositif de mesure de longueurs pour mesurer la distance entre un point (A) d'un premier objet (1) et un point (B) d'un second objet (2), comportant :
- une règle de mesure (10) avec une graduation (11), cette règle présentant un élément de fixation (13) par lequel elle peut être fixée sur le premier objet (1),
- un dispositif d'exploration (20) pour explorer la graduation (11), ce dispositif présentant un élément de fixation (21) par lequel il peut être fixé sur le second objet (2),
- des éléments de guidage (22) sur le dispositif d'exploration (20) pour guider le dispositif d'exploration (20) le long de la règle de mesure (10) et parallèlement à celle-ci,
**caractérisé en ce que** l'élément de fixation (13) de la règle de mesure (10) est un palier de rotation (13) pour permettre à la règle de mesure (10) de tourner autour de l'axe de mesure (X) pendant les opérations de mesure.

2. Dispositif de mesure de longueurs selon la revendication 1, **caractérisé en ce que** le palier de rotation (13) est monté dans une zone d'extrémité (C) de la règle de mesure (10).

3. Dispositif de mesure de longueurs selon la revendication 2, **caractérisé en ce que** la règle de mesure (10) est montée sur un support de règle de mesure (12) de manière à pouvoir se déplacer transversalement en partant d'un point de référence de mesure (A), et le support de règle de mesure (12) est relié rigidement dans la direction de mesure (X) par une zone d'extrémité (C) à une partie interne (14) du palier de rotation (13), qui lui-même présente une partie externe (15) qui peut tourner librement par rapport à une partie interne (13) et qui sert à la fixation sur le premier objet (1).

4. Dispositif de mesure de longueurs selon la revendication 3, **caractérisé en ce que** le point de référence de mesure (A) est disposé à une certaine distance dans la direction de mesure (X) de la zone d'extrémité (C), et la partie externe (15) du palier de rotation (13) est fixée au premier objet (1) au point de référence de mesure (A).

5. Dispositif de mesure de longueurs selon la revendication 1, **caractérisé en ce que** le dispositif d'exploration (20) est fixé à l'élément de fixation (21) par une tige d'accouplement (23).

6. Dispositif de mesure de longueurs selon la revendication 5, **caractérisé en ce que** la longueur de la tige d'accouplement (23) est au moins à peu près égale à la longueur de la règle de mesure (10).

7. Dispositif de mesure de longueurs selon une des revendications précédentes, **caractérisé en ce que** l'élément de fixation du dispositif d'exploration (20) présente un élément qui peut être serré radialement sur une portée interne (30) du second objet (2), cet élément de fixation comprenant notamment un élément d'expansion (21) qui, par l'intermédiaire d'un élément d'actionnement (31, 32, 33), peut être expansé radialement et ainsi être serré sur une portée interne (30) du second objet (2).

8. Dispositif de mesure de longueurs selon une des revendications précédentes, **caractérisé en ce que** le dispositif d'exploration (20) présente des éléments de guidage (22) qui sont en contact avec la règle de mesure (10) et/ou avec un support de règle de mesure (12), de sorte qu'une rotation du dispositif d'exploration (20) autour de l'axe de mesure (X) est transmise à la règle de mesure.

9. Machine comportant :
- deux corps de machine (5, 6) qui sont mobiles l'un par rapport à l'autre,
- au moins un bras télescopique entre les deux corps de machine (5, 6) et qui est constitué d'au moins deux parties télescopiques (1, 2) pouvant coulisser l'une par rapport à l'autre et tourner autour de l'axe longitudinal (X),
- une première articulation à la cardan (7) montée sur la première partie télescopique (1) pour assurer un accouplement à déplacement angulaire mais avec résistance à la torsion autour de l'axe longitudinal (X), de la première partie télescopique (1) par rapport au premier corps de machine (5),
- une seconde articulation à la cardan (8) montée sur la seconde partie télescopique (2) pour assurer un accouplement à déplacement angulaire mais avec résistance à la torsion autour de l'axe longitudinal (X), de la seconde partie télescopique (2) par rapport au second corps de machine (6),
- un dispositif de mesure de longueurs comprenant une règle de mesure (10) qui est accouplée à la première partie télescopique (1), et un dispositif d'exploration (20) qui est accouplé à la seconde partie télescopique (2), **caractérisée en ce qu'**entre la première partie télescopique (1) et la règle de mesure (10) est monté un palier de rotation (13) pour permettre à la règle de mesure (10) de tourner autour de l'axe longitudinal (X) pendant les opérations de mesure.

10. Machine selon la revendication 9, **caractérisée en ce que** la règle de mesure (10) est montée sur un support de règle de mesure (12) de manière à pouvoir se déplacer transversalement en partant d'un point de référence de mesure (A), et le support de règle de mesure (12) est relié rigidement dans la direction de mesure (X) par une zone d'extrémité (C) à une partie interne (14) du palier de rotation (13), qui lui-même présente une partie externe (15) qui peut tourner librement par rapport à une partie interne (13) et qui est fixée à une extrémité libre de la première partie télescopique (1).

11. Machine selon la revendication 10, **caractérisée en ce que** la partie télescopique (1), au point de référence de mesure (A), est reliée au premier corps de machine (5) par la première articulation à la cardan (7).

12. Machine selon la revendication 10 ou 11, **caractérisée en ce que** la zone d'extrémité (C) est espacée du point de référence de mesure (A) selon la direction de mesure (X) et que les coefficients de dilatation thermique du support de mesure (12) et de la première partie télescopique (1) entre ces deux points (C, A) sont au moins à peu près égaux.

13. Machine selon une des revendications 9 à 12, **caractérisée en ce que** le dispositif d'exploration (20) est fixé par une tige d'accouplement (23) à l'extrémité libre de la seconde partie télescopique (2).

14. Machine selon une des revendications 9 à 13, **caractérisée en ce que** le dispositif d'exploration (20) est serré radialement par un élément expansif (21) sur une portée interne (30) de la seconde partie télescopique (2).

15. Machine selon une des revendications 9 à 14, **caractérisée en ce que** sur la seconde partie télescopique (2) est fixée une partie de guidage (21) rigide à la torsion et dans laquelle est guidée la règle de mesure (10) et/ou un support de mesure (12).
